# EUROPEAN PATENT APPLICATION

(11) **EP 2 996 425 A1**
(43) Date of publication of application: **16.03.2016**
(21) Application number: 14306390.7
(22) Date of filing: 10.09.2014
(51) Int. Cl.: H04W 74/08

(54) **Method for operating a first wireless node communicating with a second wireless node, and device performing the method**

(71) Applicant: Thomson Licensing, 92130 Issy-les-Moulineaux (FR)
(72) Inventor: van Oost, Koen, 2150 Borsbeek (BE); Van Doorselaer, Karel, 2650 Edegem (BE)
(74) Representative: Arnold, Klaus-Peter

(57) **Abstract**

A method for operating a first wireless node (STA1) communicating with a second wireless node (AP1), comprising the steps of using a communication channel to determine whether a hidden node or an exposed node is disturbing the wireless communication between the first and second wireless node (110), and reducing a receiver sensitivity of the first wireless node (STA1) in case a hidden node or an exposed node is disturbing (120).

## Description

### TECHNICAL FIELD

The invention relates to the field of wireless nodes communicating with each other via a wireless communication.

### BACKGROUND OF THE INVENTION

Access gateways are widely used to connect devices in enterprises or homes to the Internet or any other wide area network (WAN). Access gateways use for example digital subscriber line (DSL) technology that enables high data rate transmission over copper lines or optical lines. Access gateways, but also other devices such as routers, switches, telephones and set-top boxes, are understood in this context as customer premises equipment (CPE) devices.

Access gateways including wireless technology have a key role in today's home and professional environments. A mechanism for connecting wireless devices to a local area network (LAN) is called Wi-Fi™, which is a brand name of the Wi-Fi™ Alliance for devices using the IEEE 802.11 family of standards for wireless data transmission. The IEEE 802.11 standards define two types of wireless nodes, a general wireless device that can connect to other devices called a station (denoted as STA) and a special type of a station that is in control of the network, namely an access point (denoted AP). A Wi-Fi™ network, also called a WLAN (wireless local area network), consists of an AP with one or several STA connected to the AP.

Due to its flexible and "invisible" nature, many LAN applications are utilizing WLAN rather than the classical wired Ethernet approach. This widespread usage of wireless LAN has exposed however a serious downside of using a shared medium technology: interference. Interference, both WLAN and non-WLAN related, leads to a degraded user experience. IEEE 802.11 networks apply a medium access method in which collisions are avoided by sensing that the medium is used (denoted as CSMA-CA). The medium access method is also commonly known as "listen before talk", describing the essence of the method.

In certain circumstances, the WLAN connection can suffer from interference, resulting in poor performance and even connection loss. Two main situations are known as hidden node and exposed node.

A hidden node is invisible to some of the nodes of a wireless network, leading to a practical failure of the CSMA-CA method which causes packet collision/corruption over air. A station can even lose the wireless connection with the access point because the beacons from its access point are too frequently colliding with frames from hidden WLAN nodes.

Most WLAN implementations react to packet collision/corruption by lowering the modulation rate used, which does not help in case of hidden nodes. Further lowering of the modulation rate can lead to a downward spiral of further degradation of the overall system throughput. This complete collapse due to a hidden node is countered by the RTS/CTS (Request-To-Send/Clear-To-Send) mechanisms, but this mechanism comes with a significant overhead: i.e. before each unicast data frame, a transmitting node is sending a broadcast RTS frame, including an indication as to how much airtime the frame will take, which frame has to be answered by a CTS frame from the receiving node, echoing how much airtime the frame will take. Each WLAN node that hears either the CTS or the RTS frame has to respect the time requested to keep the medium free. As a result of this protocol overhead, not all devices use RTS/CTS signaling for all usage patterns, e.g. non-aggregated 802.11n/ac frames are generally not protected. Besides the additional overhead, the RTS/CTS method is not protecting broadcast frames.

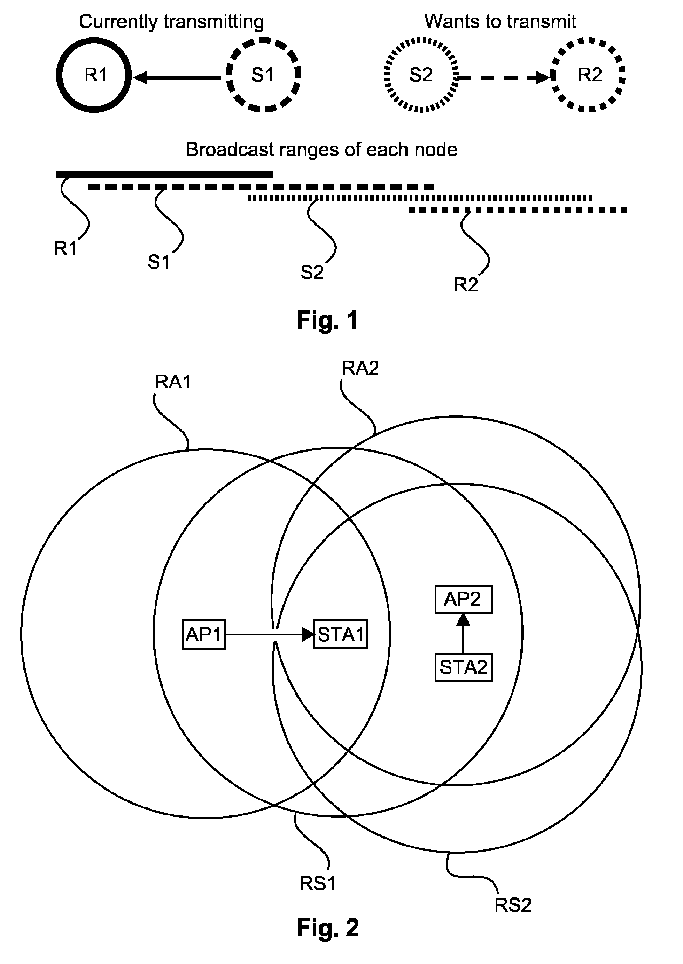

Next to the hidden node problem, there is also the exposed node problem, as explained with regard to figure 1: in some cases, a transmitting node S2 can be unnecessarily blocked from sending frames by the CSMA-CA protocol, when a wireless node S1 is transmitting that is within the range of S2, but out of the range of the node R2 to which S2 wants to transmit a frame. The CSMA-CA protocol prohibits S2 to send its frame as long as S1 is transmitting, whereas parallel transmissions would be perfectly possible. Although this does not lead to a complete collapse of the system throughput, as can happen with the hidden node problem, it does reduce the spectral efficiency of the total system.

In essence, both the hidden node problem as well as the exposed node problem are related to the radio frequency (RF) coverage of the different nodes. Ideally, this RF coverage can be tuned such that only the nodes that need to communicate with each other are within range of each other, excluding all the rest. The obvious solution to "tuning the RF coverage" is to vary the output power of the different nodes. Varying the output power in practice means to lower the output power as compared to todays practice to use maximum output power as dictated by regulatory rules and/or hardware capabilities. However, this only offers a solution for a given WLAN if there is a protocol defined by which the different WLAN nodes can communicate output power change requests across different WLANs, and where the different WLAN nodes - connected to those different WLANs - are respecting this protocol. A method comprising a configuration step of at least one access point able to transmit at low power on at least one low power channel is disclosed in WO 2013/174953 A1. In the absence of such a protocol supported by neighboring WLAN nodes, lowering the output power of the nodes of a WLAN will make this WLAN more susceptible to the interference from neighboring WLANS, and only make the situation worse.

Another technique that may be used to avoid interference is referred to as "Clear Channel Assessment" (CCA). Clear channel assessment determines whether a wireless communication channel is "occupied", e.g., "busy" with another wireless communication and/or has an amount of interference that makes the wireless communication channel unsuitable for communication. In this way, it is determined whether the wireless communication channel is available or not available for communication, e.g. occupied or not occupied.

US 7,623,494 discloses an apparatus and a method to adapt a clear channel assessment threshold based on a measured packet error rate, to maintain the packet error rate within a target range.

### SUMMARY OF THE INVENTION

A method for operating a first wireless node communicating with a second wireless node via a wireless communication comprises the steps of using a communication channel to determine whether a hidden node or an exposed node is present and disturbing the wireless communication between the first and second wireless node, and reducing a receiver sensitivity of the first wireless node in case a hidden node or an exposed node is disturbing.

A hidden or exposed node can be recognized for example when the first and the second wireless node each look out for a wireless node of another wireless network, and in case a third wireless node is detected only by the first wireless node, but not by the second wireless node, then that wireless node is classified as a hidden node or an exposed node depending on whether the second wireless node takes a receiving or transmitting role. Alternatively, a data rate of the wireless communication is measured and the measured data rate is compared with an expected data rate according to the received signal strength of the first and/or the second wireless node to recognize a hidden node or exposed node disturbing the wireless communication between the first and second wireless node. Then, the receiver sensitivity of the first wireless node is varied to optimize the data rate of the wireless communication.

The receiver sensitivity is reduced in a preferred embodiment to a value such that the first or the second wireless node do not recognize the detected hidden node or exposed node, but still maintaining a sufficient receiver sensitivity to receive data packets from the other wireless node of its network. Alternatively, a packet error rate of the wireless communication is measured and the receiver sensitivity is reduced to a value such that the packet error rate is below a defined threshold.

In an aspect of the invention, the first wireless node communicates with the second wireless node via a wireless communication in accordance with one of the IEEE 802.11 specifications and the first wireless node is a station or an access point. The communication channel is for example a communication channel in accordance with an IEEE 802.11k specification, or the communication channel is a proprietary communication channel being implemented by a manufacturer of the first and the second wireless node.

A device for utilizing the method comprises a controller, a memory and a wireless node including a wireless driver and a physical layer with transmit/receive buffers representing the first wireless node. The device is for example a customer premises equipment device, e.g. an access gateway, a router, a switch or a set-top box, or a mobile device, e.g. a laptop, a tablet PC or a smart phone.

A non-transitory program storage medium, being readable by a computer and comprising computer executable program code for performing the method.

### BRIEF DESCRIPTION OF THE DRAWINGS

Preferred embodiments of the invention are explained in more detail below by way of example with reference to schematic drawings, which show:
- Fig. 1: a first and a second wireless network for illustrating an exposed node problem,
- Fig. 2: a first and a second wireless network for illustrating a method according to the present invention, and
- Fig. 3: a flow chart illustrating a method for operating a first wireless node communicating with a second wireless node, using a communication channel to identify a hidden node or an exposed node.

### Detailed Description of Preferred Embodiments

In the following description, a method for operating a first wireless node communicating with a second wireless node via a wireless communication and two devices comprising each a respective wireless node are described. For purposes of explanation, various specific details are set forth in order to provide a thorough understanding of preferred embodiments. It will be evident, however, to one skilled in the art that the present invention may be practiced without these specific details.

The wireless nodes are in a preferred embodiment wireless nodes in accordance with one of the IEEE 802.11 specifications. The IEEE 802.11 specifications define an access point as a base station of a wireless network, and client devices connecting with the access point are called stations. The access point and stations include each for instance a controller, e.g. a microprocessor, a non-volatile memory, in which an operating system is stored, a volatile memory for the operation of each device and a wireless node for a wireless operation. The wireless node includes a complex wireless software driver, a physical layer with data buffers and an antenna. The access point is in particular a customer premises equipment (CPE) device, for example a residential gateway, a router, a switch or a set-top box.

Figure 2 depicts a situation where a station STA1, e.g. a laptop, is wirelessly connected to an access point AP1, e.g. a residential gateway, representing a first wireless network, e.g. a home network. Close to the home network, a very busy WLAN network comprising an access point AP2 and a station STA2 is operating. The conditions are such that AP1 only "sees" STA1, but it does not "see" AP2 and STA2. STA1 on the other hand "sees" AP1, but also AP2 and STA2. AP2 and STA2 both "see" each other as well as STA1, but don't see AP1. The respective ranges RA1, RA2, RS1 and RS2 for the AP1, AP2, STA1 and STA2 are schematically indicated in figure 2 as circles with the devices AP1, AP2, STA1 and STA2 being located in the center of the respective circle.

Let us now assume that AP1 has to send a frame to STA1. If STA1 is not sending anything, AP1 will consider the medium free, and send its frame. If at the same time STA2 has to send a frame to AP2, it will also consider the medium as free - as it is out of range for frames coming from AP1- and will send its frame. In that case, the receiver of STA1 will see a collision of the frame coming from AP1 with the frame coming from STA2 - as STA1 is in the range of both AP1 and STA2. STA1 will not be able therefore to decode the frame coming from AP1.

At that moment, the "safety" mechanisms of the IEEE 802.11 specifications come into play - i.e. retransmission, larger back-off times, lowered modulation rates etc., which all have as an effect that the total data throughput over the medium is drastically decreasing. As described before, for data frames, the RTS/CTS mechanism can be used at the price of a certain overhead, i.e. decreased performance. For multicast management frames, however, this is not possible. Most impacting is the effect of hidden nodes on beacons. Beacons are multicast management frames that form the heartbeat of a WLAN network. An access point has to send out a beacon every 100ms (this time is configurable, but 100ms is common practice). If a station is not seeing beacons anymore from the access point it is connected to, it considers that it has gone out of range and disconnects correspondingly.

It is assumed now that the network AP1 - STA1 has only very little activity. Basically, most of the time, there are only beacons sent every 100ms by AP1 in this case. It is supposed now that STA2 will perform a download of a large file through AP2. Because AP2 is not seeing any activity from any other WLAN node, as AP1 is out of range for it, AP2 will grab the medium for the total duration of the download. This means that during this download STA1 will not see any beacons from AP1 anymore, as all beacons will collide with data frames from AP2, and STA1 will disconnect therefore. The network AP2 - STA2 is for instance an office network. The WLAN connection AP1 - STA1 is suffering therefore always from continuous connect-disconnect cycles at moments when the office network is heavily used, e.g. the time during working hours.

To improve the situation for the network AP1 - STA1, the wireless nodes of AP1 and/or STA1 are tuned by varying the receive sensitivity of the wireless nodes AP1 and/or STA1. By a controlled desensitizing of a given receiver, the interference level can be reduced, ideally so that the interference, i.e. the frames sent by the neighboring network, disappears in the noise floor while maintaining a decent received signal level for the frames received from the own network.

By using a communication channel between the station STA1 and the access point AP1, the received signal strength of the WLAN nodes as seen by the station STA1 to the nodes as seen by the access point AP1 can be compared and in that way, hidden and exposed nodes can be recognized. In addition or alternatively, the received signal strength of the first and/or the second wireless node are measured, a data rate of the wireless communication are measured and by comparing the measured data rate with an expected data rate according to the received signal strength, a hidden node or an exposed node is recognized. This communication channel can be proprietary, being implemented between devices of the same manufacturer, for instance between a set-top box and a gateway of the same manufacturer, or standardized, as proposed in the IEEE 201.11k specification, which is ratified, but not really adopted yet. With the information of any disturbing exposed nodes or hidden nodes, the receiver sensitivity and therefore the range of the access point and/or the station can be tuned so as to minimize the impact from any neighboring wireless networks. In case of a mobile station, the receiver sensitivity can also be adapted when moving the mobile station.

In the embodiment as described with regard in figure 2, STA1 is seeing the neighboring office network nodes for example with a received signal strength of -75 dBm (when at maximum receive sensitivity), whereas frames from AP1 are received at -55 dBm. Through communication with AP1, STA1 will know that AP1 is not seeing the other network AP2 - STA2. The station STA1 will deduce therefore the presence of a hidden node. Now STA1 lowers its receiver sensitivity so that the frames received from the neighboring network AP2 - STA2 disappear in the noise floor (about -95 dBm) and will no more be received, wherein it will continue to receive the frames from AP1 with sufficient signal strength.

In the case of maximum receive sensitivity of the wireless node of STA1, data transmission from STA1 to AP1 will be suppressed, because the neighboring office network prohibits STA1 to send frames to AP1 at times when the neighboring office network is using the medium - even though AP1 is not affected by the neighboring data transmission. At decreased sensitivity, STA1 is not seeing the neighboring traffic anymore, so that the medium is fully available at all times for STA1 and AP1.

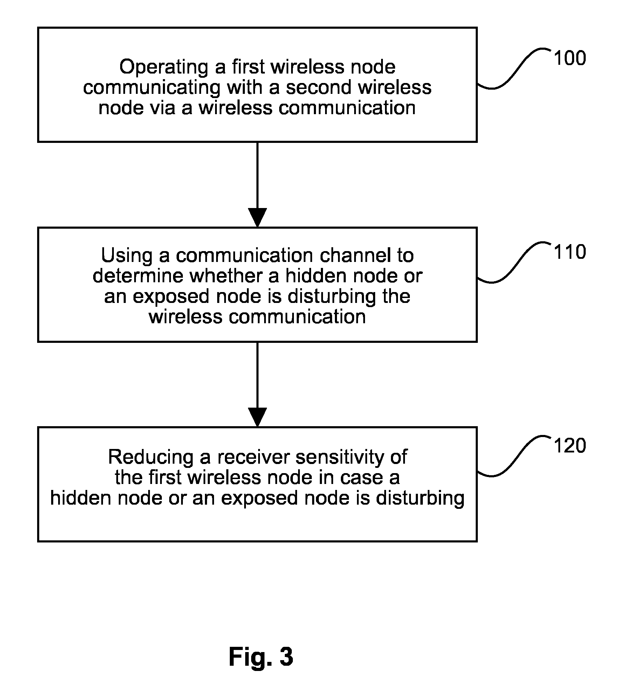

The method for operating the first wireless node StA1 communicating with the second wireless node AP1 is illustrated now with regard to a flow chart depicted in figure 3. The first wireless node StA1 wirelessly communicates with the second wireless node AP1, e.g. by exchanging data packets, step 100. A communication channel between STA1 and AP1 is used to determine whether a hidden node or an exposed node is disturbing the communication between AP1 and STA1, step 110, as described above. In case a hidden node or an exposed node is recognized, the receiver sensitivity of the first wireless node STA1 is reduced, step 120, or alternatively or in addition, the receiver sensitivity of the second wireless node AP1. A check for a hidden node or an exposed node is made for example always, when the data rate of the wireless communication is drastically reduced, e.g. when the data rate is below a predefined limit, or at regular intervals, or whenever the (averaged) RSSI changes significantly.

Also other embodiments of the invention may be utilized by one skilled in the art without departing from the scope of the present invention. The method as described is in particular not limited to a wireless network according to one of the IEEE 802.11 specifications, and may be utilized also for a HyperLAN or a Bluetooth network. The invention resides therefore in the claims herein after appended.

## Claims

1. Method for operating a first wireless node (STA1) communicating with a second wireless node (AP1) via a wireless communication, **comprising**
using a communication channel to determine whether a hidden node or an exposed node is present and disturbing the wireless communication between the first and second wireless node (110), and
reducing a receiver sensitivity of the first wireless node (STA1) in case a hidden node or an exposed node is disturbing (120).

2. The method of claim 1, comprising
the first and second wireless node each look out for a wireless node of another wireless network,
in case a third wireless node is detected only by the first wireless node, but not by the second wireless node, classifying that third wireless node as a hidden node or an exposed node, depending on whether the second wireless node takes a receiving or transmitting role, and
reducing the receiver sensitivity of the first wireless node (STA1) to optimize a data rate of the wireless communication between the first and second wireless node.

3. The method of claim 1, comprising
measuring a received signal strength of the first and/or the second wireless node,
measuring a data rate of the wireless communication and comparing the measured data rate with an expected data rate according to the received signal strength of the first and/or the second wireless node to recognize the hidden node or exposed node, and
reducing the receiver sensitivity of the first wireless node (STA1) to optimize a data rate of the wireless communication between the first and second wireless node.

4. The method of claim 1, 2 or 3, comprising
reducing the receiver sensitivity to a value such that the first or the second wireless node do not recognize the detected hidden node or exposed node.

5. The method of claim 1, 2 or 3, comprising
measuring a packet error rate of the wireless communication and reducing the receiver sensitivity to a value such that the packet error rate is below a defined threshold.

6. The method of one of the preceding claims, comprising
the first wireless node (STA1) communicating with the second wireless node (AP1) via a wireless communication in accordance with one of the IEEE 802.11 specifications.

7. The method of one of the preceding claims, wherein the first wireless node (STA1) is a station or an access point according to one of the IEEE 802.11 specifications.

8. The method of claim 6 or 7, wherein the communication channel is a communication channel in accordance with IEEE 802.11k.

9. The method of one of the preceding claims, wherein the communication channel is a proprietary communication channel being implemented by a manufacturer of the first and the second wireless node.

10. The method of one of the preceding claims, wherein the first wireless node (STA1) or the second wireless node (AP1) is included within a customer premises equipment device.

11. Device comprising a controller, a memory and a wireless node including a wireless driver and a physical layer with transmit/receive buffers, the memory storing computer executable program code for performing a method according to one of the preceding claims.

12. The device of claim 11, wherein the device is a customer premises equipment device, or a laptop, a tablet PC or a smart phone.

13. A non-transitory program storage medium, being readable by a computer and comprising computer executable program code for performing a method in accordance with one of the claims 1 - 10.
